# FASCICULE DE BREVET EUROPEEN

(11) **EP 1 385 244 B1**
(45) Date de publication et mention de la délivrance du brevet: **26.09.2012**
(21) Numéro de dépôt: 03291847.6
(22) Date de dépôt: 25.07.2003
(51) Int. Cl.: H02G 3/10

(54) **Boîtier pour appareillage électrique à rapporter le long d'une goulotte**
Dose für elektrisches Gerät zur Montage entlang eines Kabelkanals
Box for electrical apparatus to be placed alongside a cable duct

(30) Priorité: 26.07.2002 FR 0209518
(43) Date de publication de la demande: 28.01.2004
(73) Titulaire: Legrand France, 87000 Limoges (FR); Legrand SNC, 87000 Limoges (FR)
(72) Inventeur: Adam, Damien, 72240 Domfront en Champagne (FR)
(74) Mandataire: Stankoff, Hélène

(56) Documents cités:
- EP-A- 0 921 617
- US-A- 5 861 576

## Description

La présente invention concerne un boîtier pour appareillage électrique à disposer, en saillie sur une paroi, le long d'une aile latérale longitudinale d'un socle qui porte, le long de son bord libre longitudinal, des moyens de montage de couvercle et qui est pourvue d'au moins une ouverture transversale engendrant une interruption desdits moyens de montage du couvercle sur une longueur déterminée.

Plus particulièrement, elle concerne un boîtier comprenant, d'une part, dans un de ses côtés, une ouverture apte à venir se positionner en regard de ladite ouverture transversale de ladite aile latérale longitudinale dudit socle, et, d'autre part, un accessoire de liaison qui, s'étendant à compter dudit boîtier, en correspondance avec son ouverture, est destiné à coopérer avec ledit socle.

Un tel accessoire de liaison est avantageusement utilisé pour établir la jonction entre l'espace intérieur du socle et l'intérieur du boîtier d'appareillage électrique rapporté le long de ce socle en regard de l'ouverture pratiquée dans une de ses ailes latérales.

On connaît un tel accessoire de liaison se présentant sous la forme d'un auvent, qui s'étend à partir d'une ouverture du boîtier d'appareillage électrique, et qui est destiné à recouvrir localement ledit socle pour fermer et masquer les bords coupés du couvercle de fermeture interrompu sur le socle.

Bien qu'un tel auvent empêche l'accès à l'intérieur du socle de goulotte au niveau de l'interruption du couvercle de fermeture, il nuit à l'aspect esthétique de l'ensemble en formant une surépaisseur sur la goulotte fermée.

On connaît également du document ES 90 01 306 un boîtier pour appareillage électrique, tel que défini en introduction, qui comprend un auvent formant accessoire de liaison et venant recouvrir transversalement un couvercle de fermeture continu encliqueté sur les moyens d'encliquetage interrompus des ailes latérales du socle de goulotte.

Ici, l'auvent permet d'éviter le fléchissement du couvercle de fermeture au niveau de l'interruption de l'encliquetage dudit couvercle sur ledit socle et de respecter ainsi le degré de protection vis-à-vis d'une introduction ultérieure d'objets à l'intérieur du socle de la goulotte.

Toutefois, le fait de rapporter sur le couvercle continu une pièce supplémentaire détériore l'esthétique de l'ensemble puisque la continuité du couvercle est interrompue.

Pour éviter cette détérioration de l'esthétique, il a été proposé, dans le document US 5 861 576, d'insérer directement le boîtier d'appareillage électrique dans l'ouverture transversale réalisée dans l'aile latérale longitudinale correspondante du socle de goulotte et d'encliqueter le couvercle de fermeture dans les moyens de montage correspondants du socle, sans utiliser d'accessoire de liaison.

Dans ce cas, la partie des moyens de montage du couvercle de fermeture, située au niveau de l'interruption des moyens de montage de l'aile latérale longitudinale correspondante du socle, reste libre, sans encliquetage.

Ici, même si l'esthétique est améliorée du fait de la continuité du couvercle de fermeture, l'interruption des moyens de montage du couvercle d'une des ailes latérales longitudinales du socle de goulotte entraîne localement une perte du degré d'isolation des câbles et/ou conducteurs circulant dans ledit socle ainsi qu'une diminution du degré de protection vis-à-vis de la pénétration d'objets extérieurs.

De plus, lorsque le couvercle de fermeture est réalisé en matière plastique et présente une grande largeur, il peut s'affaisser ou fléchir facilement si l'on vient appuyer sur celui-ci au niveau de l'interruption des moyens de montage prévus sur la paroi longitudinale correspondante du socle de goulotte.

L'affaissement ou le fléchissement du couvercle fermeture est d'autant plus probable que l'ouverture transversale prévue dans l'aile latérale longitudinale du socle de la goulotte est grande pour permettre l'adaptation d'un boîtier de grandes dimensions prévu pour recevoir plusieurs appareillages électriques juxtaposés.

Afin de résoudre l'ensemble des inconvénients précités de l'état de la technique, l'invention propose un nouveau boîtier pour appareillage électrique à disposer, en saillie sur une paroi, le long d'une aile latérale longitudinale d'un socle, qui comporte un accessoire de liaison permettant d'assurer, sur toute la longueur du socle de goulotte, y compris sur la longueur de l'ouverture transversale pratiquée dans une aile latérale longitudinale de ce socle, une continuité des moyens de montage destinés à recevoir les moyens de montage complémentaires du couvercle de fermeture du socle de façon à permettre le montage du couvercle de fermeture en continu sur toute la longueur du socle, sans surépaisseur, et avec un bon degré d'isolation de la goulotte fermée.

Plus particulièrement, l'invention propose un boîtier pour appareillage, tel que défini en introduction, caractérisé en ce que ledit accessoire de liaison comprend une poutre qui porte, le long d'un bord longitudinal, des moyens de montage de couvercle aptes à s'étendre sur ladite longueur déterminée pour établir une liaison entre lesdits moyens de montage de couvercle interrompus de ladite aile latérale longitudinale dudit socle.

D'autres caractéristiques non limitatives et avantageuses du boîtier selon l'invention sont les suivantes :
- la poutre déborde de part et d'autre desdits moyens de montage de couvercle de sorte qu'elle présente, à chaque extrémité, une partie qui prend appui sur la tête de ladite aile latérale longitudinale du socle, en la couvrant ;
- l'accessoire de liaison comporte deux jambages solidaires de deux parties d'extrémité de la poutre et s'étendant perpendiculairement à celle-ci pour former avec ladite poutre une arche en U, lesdits jambages présentant une largeur telle que, lors de la mise en place de ladite arche dans ladite ouverture transversale de ladite aile latérale longitudinale, ils sont aptes à recouvrir deux bords coupés parallèles de cette dernière ;
- lesdits jambages et ladite poutre forment une pièce monobloc ;
- lesdits jambages sont rapportés sur ladite poutre ;
- lesdits jambages étant essentiellement plans, ils s'étendent à partir d'un bord longitudinal de la poutre, opposé à celui le long duquel courent les moyens de montage de couvercle, et sont aptes à recouvrir une partie de la face externe de ladite aile latérale longitudinale lors de la mise en place dudit accessoire de liaison sur ledit socle ;
- l'accessoire de liaison est rapporté sur ledit boîtier ;
- le montage de l'accessoire de liaison sur le boîtier est réalisé par coulissement d'une nervure dans une rainure ;
- l'accessoire de liaison vient de formation avec une partie du boîtier ;
- l'accessoire de liaison forme un auvent qui, s'étendant à compter du boîtier, en correspondance avec son ouverture, est destiné à fermer l'espace situé entre ladite ouverture du boîtier et ladite ouverture transversale de l'aile latérale longitudinale dudit socle pour établir la jonction entre l'intérieur du boîtier et l'espace intérieur du socle ;
- lesdits moyens de montage de couvercle portés par ladite poutre comprennent une gorge d'encliquetage ;
- lesdits moyens de montage de couvercle portés par ladite poutre sont identiques aux moyens de montage de couvercle portés par ladite aile latérale longitudinale ; et
- l'accessoire de liaison est réalisé en une seule pièce par moulage d'une matière plastique.

La description qui va suivre en regard des dessins annexés, donnés à titre d'exemples non limitatifs, fera bien comprend en quoi consiste l'invention et comment elle peut être réalisée.

Sur les dessins annexés:
- la figure 1 est une vue schématique en perspective éclatée d'un boîtier pour appareillage électrique selon l'invention disposé le long d'une goulotte ;
- la figure 2 est une vue schématique en perspective d'un côté de l'accessoire de liaison du boîtier de la figure 1 ;
- la figure 3 est une vue schématique en perspective d'un autre côté de l'accessoire de liaison de la figure 2 ;
- la figure 4 est une vue schématique en perspective d'une partie formant couvercle du boîtier de la figure 1 ;
- les figures 5 et 6 représentent schématiquement deux étapes de montage du boîtier de la figure 1, le long d'une goulotte ;
- la figure 7 est une vue de dessus d'une partie d'un mode de réalisation du boîtier selon l'invention permettant de visualiser les moyens de montage de l'accessoire de liaison sur le boîtier ; et
- la figure 8 est une vue de dessus d'une partie d'un autre mode de réalisation du boîtier selon l'invention permettant de visualiser les moyens de montage de l'accessoire de liaison sur le boîtier.

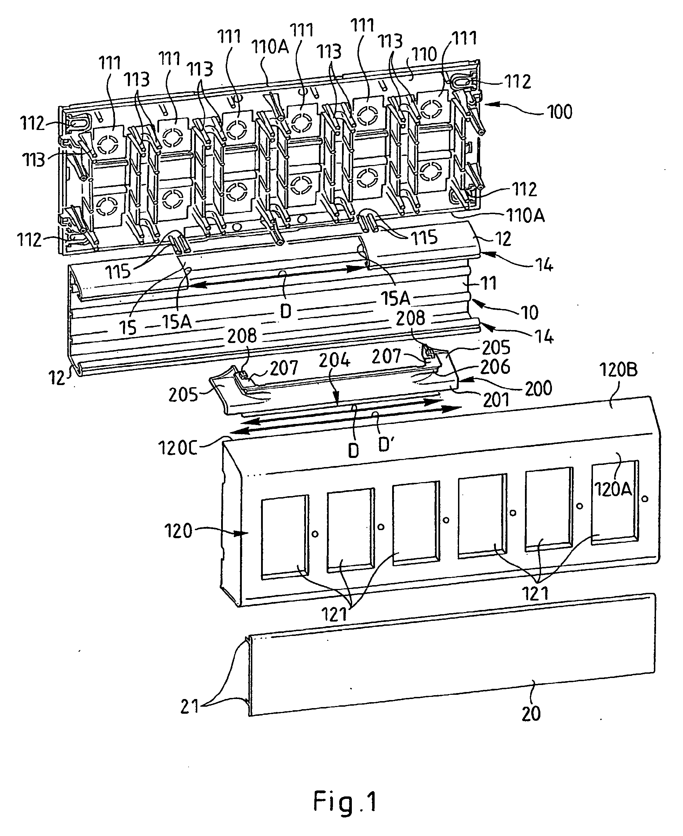

Sur les figures 1, 5 et 6, on a représenté une goulotte mise en oeuvre, par exemple, pour le support, le logement et la protection de divers appareillages, et en particulier de divers appareillages électriques aussi bien que pour le support, le logement et la protection des conducteurs ou des canalisations nécessaires à la desserte de ces appareillages.

Cette goulotte comprend un socle 10 fermé par un couvercle de fermeture 20.

Le socle 10, connu en soi, présente une section globalement en U avec un fond 11 à partir duquel s'élèvent perpendiculairement deux ailes latérales longitudinales 12 parallèles qui portent en tête des retours 12A dirigés l'un vers l'autre.

Chaque retour 12A de chaque aile latérale longitudinale 12 porte, le long de son bord libre longitudinal 13, des moyens de montage de couvercle 14 destinés à coopérer par encliquetage avec des nervures longitudinales 21 prévues à proximité des bords longitudinaux du couvercle de fermeture 20 pour le montage de celui-ci sur ledit socle 10.

Ces moyens de montage de couvercle 14 comprennent, pour chaque aile latérale longitudinale 12, une gorge longitudinale ouverte vers l'avant du socle 10 et une nervure longitudinale qui s'étend à partir du fond de la gorge longitudinale vers le fond 11 dudit socle 10.

De tels moyens de montage de couvercle étant connus en soi, ils ne seront pas décrits ici plus en détail.

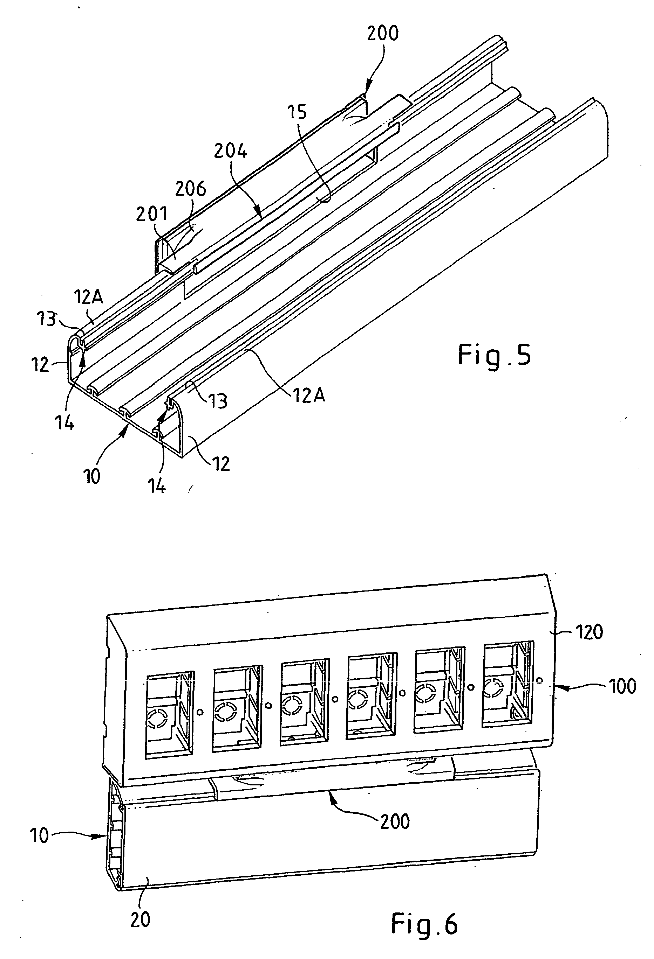

Comme le montrent les figures 1 et 5, une des ailes latérales longitudinales 12 du socle 10 est pourvue d'une ouverture transversale 15 qui s'étend sur pratiquement toute la hauteur de ladite aile latérale longitudinale 12 jusqu'à sa tête de sorte que ladite ouverture transversale 15 engendre une interruption des moyens de montage de couvercle 14 sur une longueur déterminée D. Cette longueur déterminée D correspond à la longueur de l'ouverture transversale 15.

Par ailleurs, sur les figures 1 et 6, on a représenté un boîtier 100 pour appareillage électrique à disposer, en saillie, sur une paroi (non représentée), par exemple une paroi murale, à l'extérieur du socle 10 le long d'une de ses ailes latérales longitudinales 12.

Ce boîtier 100 comprend ici une platine 110 dont le bord périphérique 110A suit un trajet rectangulaire. Cette platine 110 est pourvue, à ses quatre coins, d'orifices traversants 112 pour le passage d'organes d'ancrage (non représentés) en vue de la fixation du boîtier 100 à la paroi considérée.

Ici, le boîtier 100 est destiné à loger une pluralité d'appareillages électriques (non représentés), par exemple des interrupteurs électriques. Il est donc prévu sur la platine 110 une pluralité de logements 111 destinés à accueillir lesdits appareillages électriques (non représentés).

Chaque logement 111, globalement de forme parallélépipédique rectangle, est bordé par des colonnes 113 aux sommets desquelles sont destinés à être montés des supports d'appareillage (non représentés).

Le boîtier 100 comporte également un capot 120 de forme parallélépipédique rectangle avec une paroi de façade 120A et des côtés latéraux 120B. Le bord périphérique 120C du capot 120 suit également un trajet rectangulaire et est destiné à venir s'adapter sur le bord périphérique 110A de la platine 110 lors de la mise en place du capot 120 sur cette dernière.

Les bords périphériques 110A, 120C de la platine 110 et du capot 120 comprennent des moyens de montage complémentaires (non référencés).

Le capot 120 monté sur la platine 110 du boîtier 100 forme intérieurement un logement rectangulaire accueillant les appareillages électriques (non représentés).

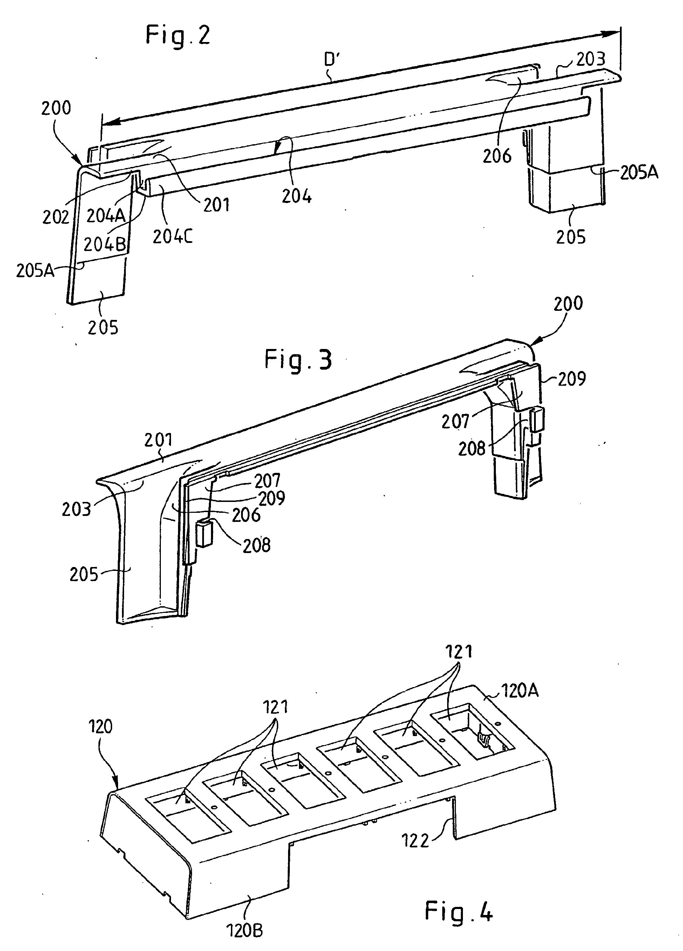

Comme le montrent les figures 1 et 4, la paroi de façade 120A du capot 120 du boîtier 100 comporte une pluralité d'ouvertures rectangulaires 121 destinées à venir se placer en regard des logements 111 de la platine 110.

Ces ouvertures rectangulaires 121 autorisent l'accès aux appareillages électriques logés dans le boîtier 100.

En outre, le capot 120 du boîtier 100 comporte, dans un de ses côtés latéraux 120B, une ouverture 122 apte à venir se positionner en regard de ladite ouverture transversale 15 de ladite aile latérale longitudinale 12 du socle 10 de façon à faire communiquer l'espace intérieur du boîtier 100 avec celui du socle 10.

L'ouverture transversale 15 de l'aile latérale longitudinale 12 doit être réalisée, sur les indications du fabricant, à des dimensions pratiquement identiques à celles de ladite ouverture 122 du boîtier 100.

Ainsi, des câbles ou des conducteurs électriques du réseau circulant dans le socle 10 de la goulotte peuvent être déviés en direction de l'intérieur du boîtier 100, via lesdites ouvertures 122, 15, et être raccordés aux appareillages électriques logés dans le boîtier 100 pour leur alimentation.

En outre, comme le montrent les figures 1 et 6, le boîtier 100 comprend un accessoire de liaison 200 qui, s'étendant à compter dudit boîtier 100, en correspondance avec son ouverture 122, est destiné à coopérer avec ledit socle 10.

Cet accessoire de liaison 200 est destiné à fermer l'espace formé entre ladite ouverture 122 du boîtier 100 et ladite ouverture transversale 15 de l'aile latérale longitudinale 12 correspondante du socle 10 pour établir une jonction étanche entre l'intérieur du boîtier 100 et l'espace intérieur du socle 10.

Avantageusement, comme le montrent plus particulièrement les figures 2, 3 et 5, cet accessoire de liaison 200 comprend une poutre 201 plate, définie entre deux bords longitudinaux 202, 203 parallèles.

Cette poutre 201 porte, le long d'un bord longitudinal 202, des moyens de montage de couvercle 204 qui s'étendent sur une distance pratiquement identique à ladite longueur déterminée D de l'ouverture transversale 15 prévue dans l'aile latérale longitudinale 12 du socle 10.

Cette poutre 201 est apte à être positionnée dans l'ouverture transversale 15 de l'aile latérale longitudinale 12 du socle 10 de sorte que les moyens de montage de couvercle 204 qu'elle porte s'étendent sur ladite longueur déterminée D de cette ouverture transversale 15 et établissent une liaison entre les moyens de montage de couvercle 14 interrompus de l'aile latérale longitudinale 12 du socle 10 (voir figure 5).

Ici, les moyens de montage de couvercle 204 bordant la poutre 201 sont sensiblement identiques aux moyens de montage de couvercle 14 bordant l'aile latérale longitudinale 12 correspondante du socle 10.

Ils comprennent une gorge d'encliquetage 204 longitudinale ouverte vers l'avant du socle 10. Cette gorge d'encliquetage est définie entre deux bandes longitudinales parallèles 204A, 204C rattachées l'une à l'autre par une entretoise longitudinale 204B formant le fond de ladite gorge d'encliquetage 204.

Une des deux bandes longitudinales parallèles est une paroi rentrante 204A rattachée au bord libre longitudinal 13 de l'aile latérale longitudinale 12 correspondante du socle 10, l'autre des deux bandes longitudinales parallèles, rattachée à l'entretoise longitudinale 204B, constitue une bande de clipsage ou d'encliquetage 204C destinée à l'encliquetage ou au clipsage du couvercle de fermeture 20 du socle 10.

Avantageusement, la poutre 201 de l'accessoire de liaison 200 présente une longueur D' supérieure à ladite longueur déterminée D de sorte que ladite poutre 201 présente, à chaque extrémité, une partie débordante qui prend appui sur le retour 12A prévu en tête de ladite aile latérale longitudinale 12 du socle, en le recouvrant (voir figure 5).

Les parties débordantes de la poutre 201 permettent de stabiliser l'accessoire de liaison 200 rattaché au boîtier 100 en position sur l'aile latérale longitudinale 12 du socle 10.

L'accessoire de liaison 200 comporte en outre deux jambages 205 solidaires des deux parties d'extrémité de la poutre 201.

Ces jambages 205 sont essentiellement plans, et ils s'étendent à partir du bord longitudinal 203 de la poutre 201, opposé à celui le long duquel courent lesdits moyens de montage de couvercle 204, perpendiculairement à ladite poutre 201 pour former avec celle-ci une arche en U.

La distance séparant les deux jambages 205 de l'accessoire de liaison 200 est légèrement inférieure à la longueur déterminée D de l'ouverture transversale 15 de l'aile latérale longitudinale 12 du socle 10.

Ainsi, comme le montre la figure 2, les jambages 205 de l'accessoire de liaison 200 s'étendent de part et d'autre desdits moyens de montage de couvercle 204, perpendiculairement à la poutre 201.

Ces jambages 205 présentent une largeur telle que, lors de la mise en place de ladite arche dans ladite ouverture transversale 15 de ladite aile latérale longitudinale 12 du socle 10, ils sont aptes à recouvrir deux bords coupés parallèles 15A de ladite aile latérale longitudinale 12, bordant ladite ouverture transversale 15, ainsi qu'une partie de la face externe de cette dernière. Grâce à leur largeur, les jambages permettent une coupe rapide, donc peu soignée, de l'aile latérale longitudinale du socle de la goulotte.

Ils permettent ainsi d'éviter qu'un usager introduise, à l'intérieur du socle 10, des éléments extérieurs en les glissant dans ladite ouverture transversale 15 entre l'accessoire de liaison 200 et les bords coupés parallèles 15A de ladite aile latérale longitudinale 12.

En outre, chaque jambage 205 de l'accessoire de liaison 200 comprend, dans sa largeur, une ligne de prédécoupe 205A permettant son découpage en vue d'adapter la hauteur dudit jambage 205A à un socle d'épaisseur ou de profondeur inférieure à celle du socle 10 représenté sur les figures. Dans ce cas, l'espace formé entre le capot du boîtier et l'accessoire de liaison est fermé par une cale.

Ici, les jambages 205 et ladite poutre 201 forment une pièce monobloc réalisée par exemple en matière plastique moulée.

Bien entendu, on pourrait prévoir, selon une variante non représentée, que les jambages soient rapportés sur ladite poutre.

Par ailleurs, du côté des jambages 205, l'accessoire de liaison 200 comporte, à partir du bord longitudinal 203 de la poutre 201, une avancée 206 en forme d'arche. L'accessoire de liaison 200 forme ainsi un auvent qui s'étend à compter du boîtier 100, en correspondance avec son ouverture 122, en direction du socle 10 pour fermer l'espace formé entre ladite ouverture 122 du boîtier 100 et ladite ouverture transversale 15 de l'aile latérale longitudinale 12 du socle 10.

Selon les modes de réalisation représentés, l'accessoire de liaison 200 est rapporté sur le boîtier 100.

Bien entendu, selon une variante de réalisation non représentée, on pourrait prévoir que l'accessoire de liaison vienne de formation avec une partie du boîtier, par exemple qu'il soit issu du capot en formant une saillie sur une paroi latérale de celui-ci.

Avantageusement, le montage de l'accessoire de liaison 200 sur le boîtier 100 est réalisé par coulissement d'une nervure dans une rainure.

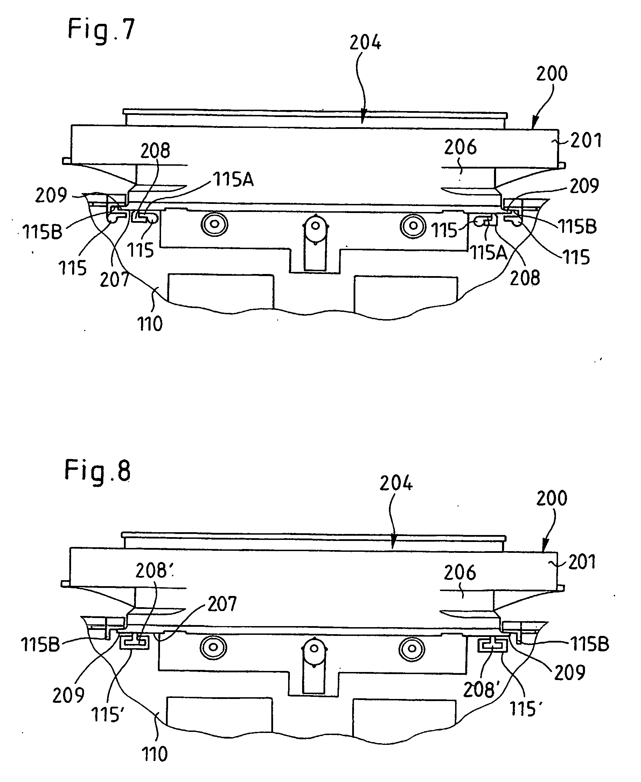

Comme le montrent plus particulièrement les figures 3 et 7, selon un premier mode de réalisation de l'accessoire de liaison 200, il comporte à cet effet, d'une part, sur la face extérieure 207 de son avancée 206, face opposée aux moyens de montage de couvercle 204, deux moyens de rainure 208 disposés face à face, chacun sur une branche de l'arche, et, d'autre part, en retrait par rapport aux moyens de rainure 208, deux nervures 209, une derrière chaque moyen de rainure 208, qui s'étendent parallèlement aux jambages 205 en formant chacune une saillie latérale sur les bords des branches de l'avancée 206 en forme d'arche.

La platine 110 du boîtier 100 comporte quant à elle, aux fins de montage de l'accessoire de liaison 200, deux couples de colonnes 115 qui s'élèvent perpendiculairement à la platine 110. Les deux couples de colonnes sont espacés l'un de l'autre d'une distance sensiblement identique à celle séparant les jambages 205 de l'accessoire de liaison 200.

Une colonne 115 de chaque couple, celle située à l'intérieur par rapport à l'ouverture transversale 15 de l'aile latérale longitudinale 12, porte sur un bord une nervure 115A orientée vers l'autre colonne 115 dudit couple.

L'autre colonne 115 de chaque couple, celle située à l'extérieur par rapport à l'ouverture transversale 15 de l'aile latérale longitudinale 12, porte en avant des moyens de rainure 115B.

Ainsi, comme le montre la figure 7, le montage de l'accessoire de liaison 200 sur la platine 110 est réalisé par coulissement de chaque nervure 115A de chaque colonne 115 dans chaque moyen de rainure 208 correspondant de l'accessoire de liaison 200, et par coulissement de chaque nervure 209 de l'accessoire de liaison 200 dans chaque moyen de rainure 115B de chaque autre colonne 115 correspondante de la platine 110.

Ce montage permet de caler l'accessoire de liaison 200 sur la platine 110 tout en autorisant un ajustement en hauteur de celui-ci par rapport à ladite platine. Il facilite une éventuelle intervention sur le câblage des appareillages électriques pour laquelle il faut simplement démonter le capot 120 et l'accessoire de liaison 200.

Selon un autre mode de réalisation représenté plus particulièrement sur la figure 8, l'accessoire de liaison 200 comprend, d'une part, sur une face tournée vers le boîtier, sur chacune des branches de l'arche, des nervures en T 208' qui s'étendent en hauteur parallèlement aux jambages 205, et, d'autre part, en retrait de chaque nervure en T 208', deux nervures 209 identiques à celles décrites précédemment.

Sur la platine 110 du boîtier 100, il est prévu, pour accueillir chaque nervure en T 208', des colonnes 115' s'élevant perpendiculairement à ladite platine 110 et écartées l'une de l'autre d'une distance sensiblement identique à celle séparant les nervures en T 208' portées par l'accessoire de liaison 200.

Ces colonnes 115' sont creuses et définissent intérieurement des rainures dans lesquelles sont destinées à coulisser les nervures en T 208'.

A côté de chaque colonne 115, il est prévu également des moyens de rainure 115B s'élevant également perpendiculairement à la platine 110 et situés sur le bord périphérique de la platine 110 pour accueillir à coulissement les nervures 209 correspondantes prévues sur l'accessoire de liaison 200.

Pour monter le boîtier 100 le long de la goulotte, l'installateur peut choisir de rapporter tout d'abord l'accessoire de liaison 200 sur la platine 110 du boîtier 100 avant de positionner ledit boîtier le long de l'aile latérale longitudinale 12 correspondante, au niveau de l'ouverture transversale 15.

Lors du positionnement du boîtier 100 le long du socle 10, la poutre 201 de l'accessoire de liaison 200 prend appui sur la tête 12A de l'aile latérale longitudinale 12 du socle 10, et les moyens de montage de couvercle 204 par cette poutre 201 s'étendent entre les deux extrémités coupées 15A des moyens de montage 14 interrompus de ladite aile latérale longitudinale 12 du socle 10.

Alternativement, comme le montre la figure 5, l'installateur peut choisir de rapporter tout d'abord l'accessoire de liaison 200 sur le socle 10 de la goulotte, avant de positionner le boîtier 100, en plaçant la poutre 201 de l'accessoire de liaison sur la tête 12A de l'aile latérale longitudinale 12 correspondante du socle 10 de telle manière que les moyens de montage de couvercle 204 qu'elle porte se positionnent dans l'ouverture transversale 15 bout à bout avec les moyens de montage 14 interrompus de cette aile. Puis, il rapporte l'accessoire de liaison 200 par coulissement sur la platine 110 du boîtier 100 positionné le long du socle 10 de la goulotte.

Dans ce dernier cas, l'accessoire de liaison 200 sert de guide et de repère pour le positionnement du boîtier 100 à l'extérieur du socle 10 le long de celui-ci.

## Revendications

1. Boîtier (100) pour appareillage électrique à disposer, en saillie sur une paroi, le long d'une aile latérale longitudinale (12) d'un socle (10) qui porte, le long de son bord libre longitudinal (13), des moyens de montage de couvercle (14) et qui est pourvue d'au moins une ouverture transversale (15) engendrant une interruption desdits moyens de montage de couvercle (14) sur une longueur déterminée (D), ledit boîtier (100) comprenant, d'une part, dans un de ses côtés (120B), une ouverture (122) apte à venir se positionner en regard de ladite ouverture transversale (15) de ladite aile latérale longitudinale (12), et, d'autre part, un accessoire de liaison (200) qui, s'étendant à compter dudit boîtier, en correspondance avec son ouverture (122), est destiné à coopérer avec ledit socle (10), **caractérisé en ce que** ledit accessoire de liaison (200) comprend une poutre (201) qui porte, le long d'un bord longitudinal (202), des moyens de montage de couvercle (204) aptes à s'étendre sur ladite longueur déterminée pour établir une liaison entre lesdits moyens de montage de couvercle (14) interrompus de ladite aile latérale longitudinale (12) dudit socle (10).

2. Boîtier (100) selon la revendication 1, **caractérisé en ce que** la poutre (201) déborde de part et d'autre desdits moyens de montage de couvercle (204) de sorte qu'elle présente, à chaque extrémité, une partie qui prend appui sur la tête (12A) de ladite aile latérale longitudinale (12) du socle (10), en la couvrant.

3. Boîtier (100) selon l'une des revendications 1 ou 2, **caractérisé en ce que** l'accessoire de liaison (200) comporte deux jambages (205) solidaires de deux parties d'extrémité de la poutre (201) et s'étendant perpendiculairement à celle-ci pour former avec ladite poutre une arche en U, lesdits jambages (205) présentant une largeur telle que, lors de la mise en place de ladite arche dans ladite ouverture transversale (15) de ladite aile latérale longitudinale (12), ils sont aptes à recouvrir deux bords coupés parallèles de cette dernière.

4. Boîtier (100) selon la revendication 3, **caractérisé en ce que** lesdits jambages et ladite poutre (201) forment une pièce monobloc.

5. Boîtier selon la revendication 3, **caractérisé en ce que** lesdits jambages sont rapportés sur ladite poutre.

6. Boîtier (100) selon l'une des revendications 3 à 5, **caractérisé en ce que**, lesdits jambages (205) étant essentiellement plans, ils s'étendent à partir d'un bord longitudinal (203) de la poutre (201), opposé à celui le long duquel courent les moyens de montage de couvercle (204), et sont aptes à recouvrir une partie de la face externe de ladite aile latérale longitudinale (12) lors de la mise en place dudit accessoire de liaison (200) sur ledit socle (10).

7. Boîtier (100) selon l'une des revendications 1 à 6, **caractérisé en ce que** l'accessoire de liaison (200) est rapporté sur ledit boîtier.

8. Boîtier (100) selon la revendication 7, **caractérisé en ce que** le montage de l'accessoire de liaison (200) sur le boîtier est réalisé par coulissement d'une nervure dans une rainure.

9. Boîtier selon l'une des revendications 1 à 6, **caractérisé en ce que** l'accessoire de liaison vient de formation avec une partie du boîtier.

10. Boîtier (100) selon l'une des revendications 1 à 9, **caractérisé en ce que** l'accessoire de liaison (200) forme un auvent qui, s'étendant à compter du boîtier, en correspondance avec son ouverture (122), est destiné à fermer l'espace situé entre ladite ouverture (122) du boîtier (100) et ladite ouverture transversale (15) de l'aile latérale longitudinale (12) dudit socle (10) pour établir la jonction entre l'intérieur du boîtier et l'espace intérieur du socle.

11. Boîtier (100) selon l'une des revendications 1 à 10, **caractérisé en ce que** lesdits moyens de montage de couvercle (204) portés par ladite poutre (201) comprennent une gorge d'encliquetage.

12. Boîtier (100) selon l'une des revendications 1 à 11, **caractérisé en ce que** lesdits moyens de montage de couvercle (204) portés par ladite poutre (201) sont identiques aux moyens de montage de couvercle (14) portés par ladite aile latérale longitudinale (12).

13. Boîtier (100) selon l'une des revendications précédentes, **caractérisé en ce que** l'accessoire de liaison (200) est réalisé en une seule pièce par moulage d'une matière plastique.

## Claims

1. A case (100) for an electrical device to be disposed in projecting relationship on a wall along a longitudinal lateral limb (12) of a base (10) which along its free longitudinal edge (13) carries cover mounting means (14) and which is provided with at least one transverse opening (15) causing an interruption in said cover mounting means (14) over a given length (D), said case (100) comprising on the one hand in one of its sides (120B) an opening (122) adapted to assume a position in facing relationship with said transverse opening (15) in said longitudinal lateral limb (12) and on the other hand a connecting accessory (200) which, extending from said case, in corresponding relationship with its opening (122), is intended to co-operate with said base (10), **characterised in that** said connecting accessory (200) comprises a beam (201) which along a longitudinal edge (202) carries cover mounting means (204) adapted to extend over said given length to establish a connection between said interrupted cover mounting means (14) of said longitudinal lateral limb (12) of said base (10).

2. A case (100) according to claim 1 **characterised in that** the beam (201) extends on respective sides beyond said cover mounting means (204) in such a way that at each end it has a portion which bears against the head (12A) of said longitudinal lateral limb (12) of the base (10), covering same.

3. A case (100) according to claim 1 or claim 2 **characterised in that** the connecting accessory (200) comprises two leg portions (205) fixed with respect to two end portions of the beam (201) and extending perpendicularly thereto to form with said beam a U-shaped arch, said leg portions (205) being of a width such that when said arch is placed in said transverse opening (15) of said longitudinal lateral limb (12) they are adapted to cover two parallel cut edges of the limb.

4. A case (100) according to claim 3 **characterised in that** said leg portions and said beam (201) form a one-piece portion.

5. A case according to claim 3 **characterised in that** said leg portions are fitted on to said beam.

6. A case (100) according to one of claims 3 to 5 **characterised in that** said leg portions (205) being essentially flat they extend from a longitudinal edge (203) of the beam (201), that is opposite to that along which the cover mounting means (204) run, and they are adapted to cover a portion of the external face of said longitudinal lateral limb (12) when said connecting accessory (200) is placed on said base (10).

7. A case (100) according to one of claims 1 to 6 **characterised in that** the connecting accessory (200) is fitted on to said case.

8. A case (100) according to claim 7 **characterised in that** the connecting accessory (200) is fitted on the case by sliding a rib into a groove.

9. A case according to one of claims 1 to 6 **characterised in that** the connecting accessory is formed with a part of the case.

10. A case (100) according to one of claims 1 to 9 **characterised in that** the connecting accessory (200) forms a canopy which extending from the case in corresponding relationship with its opening (122) is intended to close the space between said opening (122) of the case (100) and said transverse opening (15) of the longitudinal lateral limb (12) of said base (10) to establish the junction between the interior of the case and the internal space of the base.

11. A case (100) according to one of claims 1 to 10 **characterised in that** said cover mounting means (204) carried by said beam (201) comprise a latching groove.

12. A case (100) according to one of claims 1 to 11 **characterised in that** said cover mounting means (204) carried by said beam (201) are identical to the cover mounting means (14) carried by said longitudinal lateral limb (12).

13. A case (100) according to one of the preceding claims **characterised in that** the connecting accessory (200) is made in one piece by moulding a plastic material.

## Patentansprüche

1. Dose (100) für elektrisches Installationsgerät zum Anbringen an einer Wand vorspringend entlang eines Seitenlängsschenkels (12) eines Sockels (10), der längs seines freien Längsrands (13) Deckelmontagemittel (14) trägt und der mit wenigstens einer Queröffnung (15) versehen ist, die zu einer Unterbrechung der Deckelmontagemittel (14) über eine bestimmte Länge (D) führt, wobei die Dose (100) einerseits an einer ihrer Seiten (120B) eine Öffnung (122) aufweist, die gegenüber der Queröffnung (15) des Seitenlängsschenkels (12) platziert zu werden vermag, und andererseits eine Verbindungseinrichtung (200) umfasst, die sich von der Dose aus erstreckend in Übereinstimmung mit deren Öffnung (122) zum Zusammenwirken mit dem Sockel (10) bestimmt ist,
**dadurch gekennzeichnet, dass** die Verbindungseinrichtung (200) einen Träger (201) aufweist, der längs eines Längsrands (202) Deckelmontagemittel (204) trägt, die sich über diese bestimmte Länge zu erstrecken vermögen, um zwischen den unterbrochenen Deckelmontagemitteln (14) des Seitenlängsschenkels (12) des Sockels eine Verbindung herzustellen.

2. Dose (100) nach Anspruch 1,
**dadurch gekennzeichnet, dass** der Träger (201) beiderseits der Deckelmontagemittel (204) solchermaßen übersteht, dass er an jedem Ende ein Teil aufweist, das auf der Oberseite (12A) des Seitenlängsschenkels (12) des Sockels (10) diese bedeckend aufliegt.

3. Dose (100) nach einem der Ansprüche 1 oder 2,
**dadurch gekennzeichnet, dass** die Verbindungseinrichtung (200) zwei Streben (205) umfasst, die mit den beiden Endteilen des Trägers (201) fest verbunden sind und sich senkrecht zu diesem erstrecken, um mit dem Träger einen U-förmigen Bogen zu bilden, wobei die Streben (205) eine solche Breite aufweisen, dass sie beim Einsetzen des Bogens in die Queröffnung (15) des Seitenlängsschenkels (12) zwei parallele Schnittränder von diesem zu verdecken vermögen.

4. Dose (100) nach Anspruch 3,
**dadurch gekennzeichnet, dass** die Streben und der Träger (201) ein einstückiges Teil bilden.

5. Dose (100) nach Anspruch 3,
**dadurch gekennzeichnet, dass** die Streben auf dem Träger angesetzt sind.

6. Dose (100) nach einem der Ansprüche 3 bis 5,
**dadurch gekennzeichnet, dass** die Streben (205), da diese im Wesentlichen eben sind, sich von einem Längsrand (203) des Trägers (201) aus erstrecken, der entgegengesetzt zu demjenigen ist, entlang dem die Deckelmontagemittel (204) verlaufen, und beim Anbringen der Verbindungseinrichtung (200) auf dem Sockel (10) einen Teil der Außenseite des Seitenlängsschenkels (12) zu verdecken vermögen.

7. Dose (100) nach einem der Ansprüche 1 bis 6,
**dadurch gekennzeichnet, dass** die Verbindungseinrichtung (200) auf der Dose angesetzt ist.

8. Dose (100) nach Anspruch 7,
**dadurch gekennzeichnet, dass** die Montage der Verbindungseinrichtung (200) auf der Dose durch Gleiten einer Rippe in einer Nut erfolgt.

9. Dose (100) nach einem der Ansprüche 1 bis 6,
**dadurch gekennzeichnet, dass** die Verbindungseinrichtung mit einem Teil der Dose angeformt ist.

10. Dose (100) nach einem der Ansprüche 1 bis 9,
**dadurch gekennzeichnet, dass** die Verbindungseinrichtung (200) eine Abdeckung bildet, die sich von der Dose aus erstreckend in Übereinstimmung mit deren Öffnung (122) zum Schließen des zwischen der Öffnung (122) der Dose (100) und der Queröffnung (15) des Seitenlängsschenkels (12) des Sockels (10) liegenden Raums bestimmt ist, um zwischen dem Inneren der Dose und dem Innenraum des Sockels einen Verbindung herzustellen.

11. Dose (100) nach einem der Ansprüche 1 bis 10,
**dadurch gekennzeichnet, dass** die vom Träger (201) getragenen Deckelmontagemittel (204) eine Rastnut aufweisen.

12. Dose (100) nach einem der Ansprüche 1 bis 11,
**dadurch gekennzeichnet, dass** die vom Träger (201) getragenen Deckelmontagemittel (204) mit den vom Seitenlängsschenkel (12) getragenen Deckelmontagemitteln (14) identisch sind.

13. Dose (100) nach einem der vorhergehenden Ansprüche,
**dadurch gekennzeichnet, dass** die Verbindungseinrichtung (200) einstückig durch Gießen eines Kunststoffs ausgeführt ist.
